# DEMANDE DE BREVET EUROPEEN

(11) **EP 1 143 103 A1**
(43) Date de publication de la demande: **10.10.2001**
(21) Numéro de dépôt: 00810758.3
(22) Date de dépôt: 24.08.2000
(51) Int. Cl.: E06C 1/12, E06C 1/34, A01M 31/02

(54) **Mirador transportable**

(30) Priorité: 27.03.2000 EP 00810257
(71) Demandeur: Andrey, Gérard, 1784 Cournillens (CH)
(72) Inventeur: Andrey, Gérard, 1784 Cournillens (CH)
(74) Mandataire: BOVARD AG - Patentanwälte

(57) **Abrégé**

Mirador (1) conçu pour être appuyé contre un support (2) sensiblement cylindrique et vertical qui s'étend au-dessus du sol (3),
ce mirador (1) comprenant essentiellement,
- une échelle (4) qui, d'une part, comprend elle-même au moins un montant (41) équipé d'une pluralité d'échelons (42) espacés d'un pas déterminé (P) et, d'autre part, est d'un type tel que sa longueur utile totale peut être réduite,
- une platine (5) qui, portée à l'extrémité supérieure (4A) de l'échelle, est équipée d'un moyen (6) d'appui contre le support (2) sensiblement cylindrique et vertical.

## Description

L'invention se rapporte à un mirador transportable sous un volume réduit.

L'invention se rapporte plus particulièrement, mais non exclusivement à un mirador conçu pour être appuyé contre un support sensiblement cylindrique et vertical, tel un arbre ou un poteau.

Ce type de mirador comprend essentiellement, d'une part, une échelle et, d'autre part, une platine qui, portée à l'extrémité supérieure de l'échelle, forme un angle déterminé avec cette échelle et est équipée d'un moyen d'appui contre un support sensiblement cylindrique et vertical.

Par le terme platine, on désigne un élément qui, d'une part, s'inscrit dans un volume d'enveloppe sensiblement parallélépipédique rectangle aplati et, d'autre part, présente deux faces principales opposées, une face dite inférieure destinée à être orientée vers le sol et une face, dite supérieure, dont l'étendue est au moins suffisante pour qu'une personne puisse s'y tenir, que ce soit en station debout ou assise.

Lorsque le mirador est appuyé contre un support sensiblement cylindrique et vertical, la platine s'étend dans un plan sensiblement horizontal et, une personne peut :
- gravir l'échelle,
- solidariser le mirador avec le support, par exemple au moyen d'une sangle,
- prendre place sur la platine.

L'état de la technique comprend de nombreux miradors qui se distinguent essentiellement par la nature structurelle de l'échelle utilisée qui peut être :
- une échelle double de type coulissante, US-A- 5,566,780,
- une échelle démontable de type à montants constitués de tronçons superposés par emboîtement, US-A- 5,368,127,
- une échelle démontable de type à montants constitués de tronçons superposés liés par articulation, US-A- 4,742,888,
- une échelle démontable de type à montants constitués de tronçons qui, de section particulière, peuvent être, soit superposés par emboîtement, soit assemblés sous un faible volume, DE-A-41.109.186.

S'ils peuvent être effectivement transportés par une personne, lorsqu'ils ont été démontés, ces dispositifs connus sont relativement encombrants et il est pénible pour une personne de les transporter, à pieds, même sur des courtes distances.

Un résultat que l'invention vise à obtenir est un mirador qui est effectivement transportable sous un volume réduit et qui peut être aisément transporté par une personne, sur de longues distances, notamment en terrain accidenté, à travers des sous-bois ou autres.

Un autre résultat que l'invention vise à obtenir est un mirador dont la hauteur utile, c'est à dire la hauteur à laquelle la platine peut être portée, est réglable.

Est encore un résultat que l'invention vise à obtenir, un mirador dont le montage et le démontage sont rapides et peuvent être réalisés sans outil.

A cet effet, l'invention a pour objet un mirador conçu pour être appuyé contre un support sensiblement cylindrique et vertical qui s'étend au-dessus du sol,
ce mirador comprenant essentiellement,
- une échelle qui, d'une part, comprend elle-même au moins un montant équipé d'une pluralité d'échelons espacés d'un pas déterminé et, d'autre part, est d'un type tel que sa longueur utile totale peut être réduite,
- une platine qui, portée à l'extrémité supérieure de l'échelle, est équipée d'un moyen d'appui contre le support sensiblement cylindrique et vertical,
ce mirador étant caractérisé en ce que :
chaque montant de l'échelle destinée à être associée à la platine est du type constitué d'éléments télescopiques qui sont chacun d'une longueur sensiblement égale au pas qui sépare deux échelons.

D'autre résultats visés par l'invention ainsi que d'autres caractéristiques techniques de l'invention apparaîtront à la lecture de la description ci-après faite à titre d'exemple non limitatif, en regard des dessins ci-annexés qui représentent :
- figure 1 : une vue de profil d'un mirador selon l'invention en situation d'utilisation,
- figure 2 : une vue partielle et en perspective de la partie supérieure du mirador de l'invention en deux parties et en cours de montage,
- figure 3 : une vue partielle et en perspective de la partie supérieure du mirador de l'invention après montage,
- figure 4A : une vue latérale du mirador de l'invention en cours de montage,
- figure 4B : un détail de la figure 4A,
- figure 5 : une vue de dessus de la platine représentée en figure 4,
- figure 6 : une vue frontale du mirador de l'invention représenté à la figure 4,
- figures 7 à 9 : des vues frontale, latérale et dorsale d'un mirador selon l'invention à l'état démonté et replié,
- figure 10 : une vue frontale d'un mirador selon l'invention à l'état démonté et replié, dans une variante de réalisation,
- figure 11 : une vue partielle et en perspective de la partie supérieure du mirador de l'invention en cours d'utilisation,
- figure 12 : une vue en perspective d'un mirador selon l'invention à l'état démonté et replié, porté par une personne,

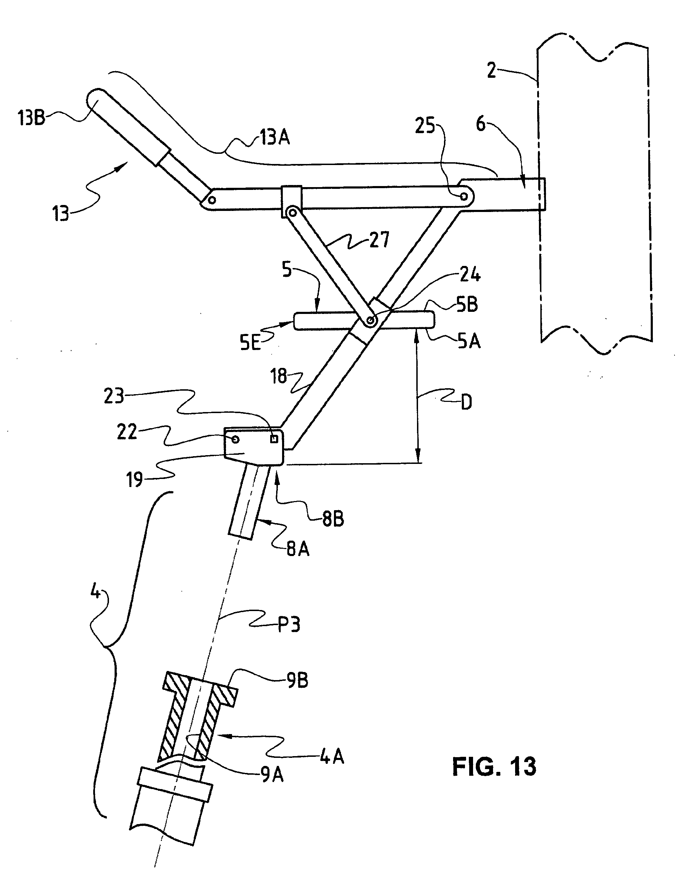

- figure 13 : une vue latérale de la partie supérieure d'un mirador selon une variante de réalisation, en cours de montage, sensiblement en situation d'utilisation,

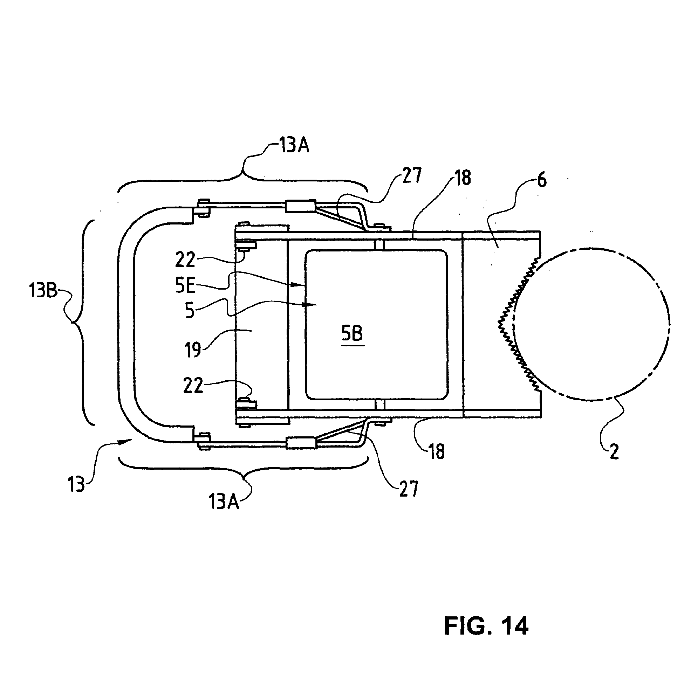

- figure 14 : une vue de dessus du mirador de la figure 13,
- figure 15 : une vue latérale du mirador de la figure 13 en situation repliée contre l'échelle.

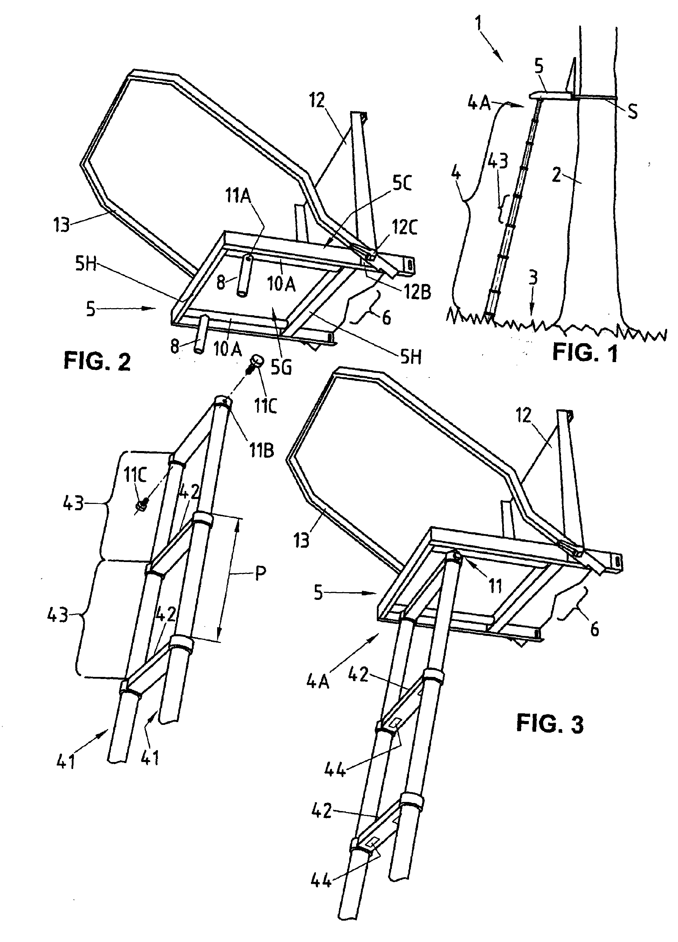

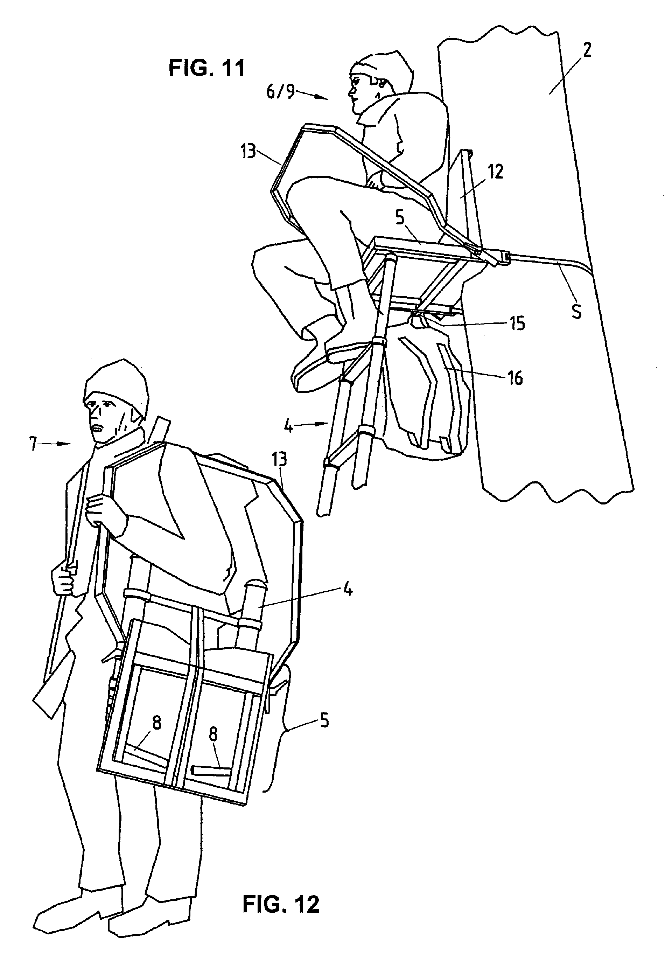

En se reportant aux dessins (figures 1 et 11), on voit un mirador 1 conçu pour être appuyé contre un support 2 sensiblement cylindrique et vertical, tel un arbre ou un poteau qui s'étend au-dessus du sol 3.

Le mirador 1 comprend essentiellement, d'une part, une échelle 4 et, d'autre part, une platine 5 qui, portée à l'extrémité supérieure 4A de l'échelle, forme un angle A déterminé avec cette échelle 4 et est équipée d'un moyen 6 d'appui contre un support 2 sensiblement cylindrique et vertical.

Le moyen 6 d'appui contre un support 2 sensiblement cylindrique et vertical consiste avantageusement en une surface concave portée par une pièce rigide.

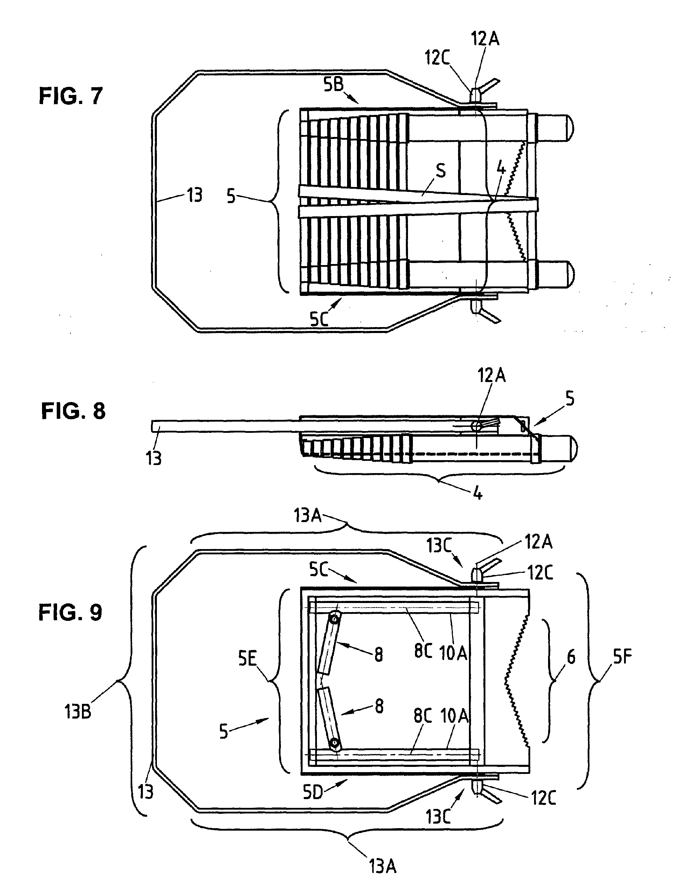

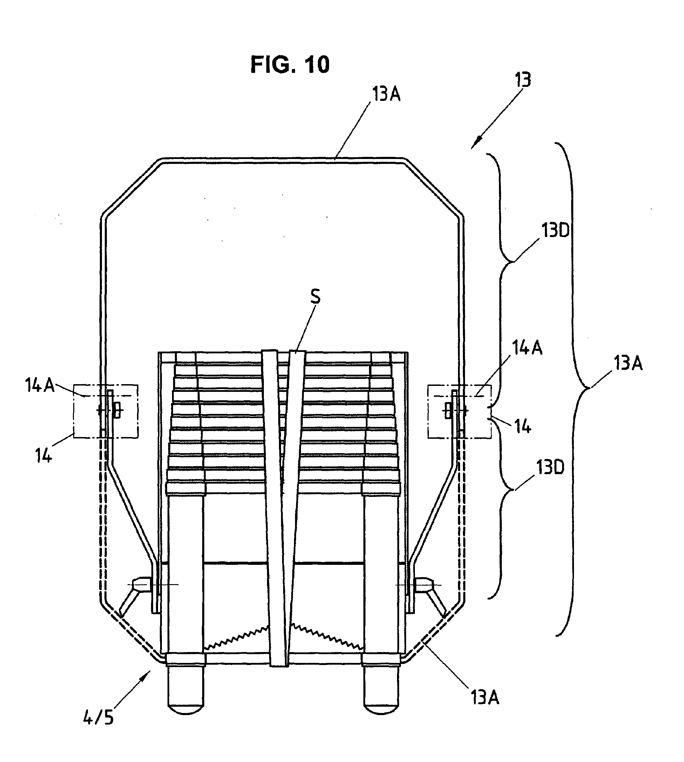

Par exemple, la surface concave est formée par une face latérale d'une pièce plate rigide qui, découpée en V, présente avantageusement des indentations (figures 7 et 10).

Ces indentations ont pour but de limiter le risque de glissement intempestif du moyen 6 d'appui sur le support vertical 2, tel un arbre.

Par sécurité, la platine 5 est, par son moyen d'appui 6 fermement appliqué contre le support 2 au moyen d'un lien S, tel une sangle qui, ancrée sur la platine de part et d'autre du moyen 6 d'appui, est disposée de manière à enserrer le support 2.

Avantageusement, la sangle trouve ancrage dans des découpes oblongues prévues dans la platine 5 de part et d'autre du moyen 6 d'appui sur l2 support 2.

Tel que cela a été annoncé, le terme platine 5 désigne un élément 5 qui, d'une part, s'inscrit dans un volume d'enveloppe sensiblement parallélépipédique rectangle aplati et, d'autre part, présente deux faces principales opposées, dont une face dite inférieure 5A destinée à être orientée vers le sol 3 et une face 5B, dite supérieure, dont l'étendue est au moins suffisante pour qu'une personne 7 puisse s'y tenir, que ce soit en station debout ou assise.

Tel que cela apparaît sur les figures, l'échelle 4, d'une part, comprend au moins un montant 41 équipé d'une pluralité d'échelons 42 espacés d'un pas déterminé P et, d'autre part, est d'un type tel que sa longueur utile totale peut être réduite.

De manière remarquable, chaque montant 41 de l'échelle 4 destinée à être associée à la platine 5 est du type constitué d'éléments télescopiques 43 qui sont chacun d'une longueur sensiblement égale au pas P qui sépare deux échelons 42.

Par éléments télescopiques 43, on désigne notamment, mais non limitativement, une pluralité d'éléments tubulaires 43 qui, de sections transversales décroissantes, sont successivement emboîtés et peuvent être chacun déplacé en translation selon l'axe longitudinal de l'ensemble, entre deux positions, dont une rétractée et une position érigée.

De préférence, l'échelle 4 comprend deux montants 41 télescopiques.

De manière encore remarquable, les éléments télescopiques 43 sont d'un type tel qu'ils sont équipés de moyens 44 d'immobilisation entre eux, c'est à dire de moyens 44 qui permettent d'immobiliser chaque élément 43 en translation par rapport à un autre dans lequel il s'emboîte, et ce, que ce soit en positon rétractée ou érigée, lesquels moyens 44 sont sélectivement actionnables de manière à permettre le réglage de la longueur utile de l'échelle par pas P.

De manière connue, le moyen 44 d'immobilisation de chaque élément télescopique 43 en translation par rapport à un autre avec lequel il coopère, comprend un pêne coulissant qui, abrité dans un logement prévu dans un échelon associé à l'un des deux éléments télescopiques considérés, est mobile entre deux positions dont, d'une part, une position active dans laquelle, en coopérant avec des butées portées par les éléments, il les immobilise en position érigée et, d'autre part, une position inactive dans laquelle il autorise le coulissement des éléments télescopiques 43, depuis la position érigée vers la position rétractée.

Le moyen 44 d'immobilisation de chaque élément télescopique 43 en translation par rapport à un autre avec lequel il coopère, n'est pas décrit ni représenté en détail car il ne fait pas partie de l'invention.

Pour cette raison, sur les dessins, la situation de ce moyen 44 d'immobilisation a été simplement symbolisée par un rectangle.

Dans une forme préférée de réalisation, la platine 5 est d'étendue suffisante pour constituer l'assise d'un siège pour une personne 7 adulte.

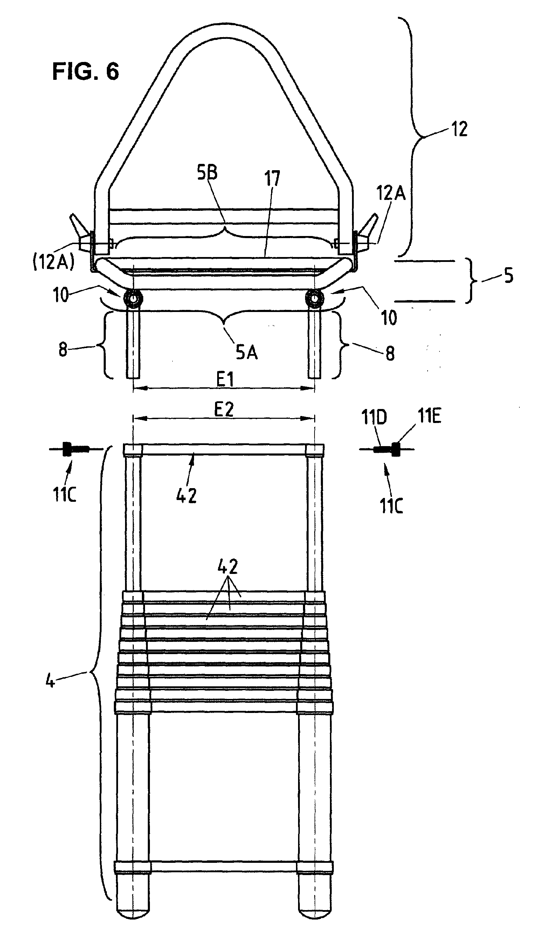

Tel que cela apparaît sur le dessin (figures 2 et 4 à 6), la platine 5 et l'extrémité supérieure 4A de l'échelle 4 comportent des éléments d'assemblage complémentaires 8, 9.

Pour constituer les éléments d'assemblage complémentaires 8, 9 :
- la platine 5 est, au niveau de sa face inférieure 5A, équipée de deux pièces rigides allongées 8 qui, sont chacune portée par un moyen 10 de guidage entre deux positions, dont une position, dite de transport, dans laquelle elles s'étendent chacune sensiblement contre la face inférieure 5A de la platine 5 et une position, dite d'utilisation, dans laquelle elles s'étendent chacune parallèlement entre elles en déterminant un certain entraxe E1, et ce, dans un plan P1 qui forme un angle A déterminé avec un plan P2 médian au volume d'enveloppe déterminé entre les deux faces opposées 5A, 5B inférieure et supérieure de la platine 5,
- l'extrémité supérieure 4A de l'échelle 4 et les pièces rigides allongées que porte la platine 5 présentent des portées d'emboîtement complémentaires 8A, 8B, 9A, 9B pour, en coopérant, assurer la liaison démontable de la platine 5 et de l'extrémité 4A de l'échelle 4.

Par plan P2 médian au volume de la platine 5, on désigne un plan qui s'étend à mi-distance entre deux faces opposées inférieure et supérieure 5A, 5B du volume d'enveloppe de la platine 5.

Ces caractéristiques techniques permettent de garantir, à la fois, la compacité de la platine lorsqu'elle doit être transportée, et ce, du fait du possible effacement des pièces rigides 8 et, d'autre part, une grande facilité de montage de cet ensemble, du fait que l'assemblage comprend essentiellement une opération d'emboîtement (figures 2, 4A, 4B, 6).

Dans une forme préférée de réalisation, d'une part, l'extrémité supérieure 4A de l'échelle 4 présente deux alésages 9A qui, chacun déterminé par une paroi 9, s'ouvrent dans une face extrême 9B située au sommet de l'échelle 4 et s'étendent, selon un entraxe E2, sensiblement parallèlement à la direction longitudinale de l'échelle et, d'autre part, la platine 5 porte des pièces 8 rigides allongées qui s'étendent selon un entraxe E1 sensiblement égal à celui prévu E2 entre les alésages 9A et présentent chacune des portées 8A, 8B dont l'une 8A permet l'emboîtement dans l'un de ces alésages 9A et, l'autre 8B limite cet emboîtement par appui sur la face extrême 9B.

Le fait que le mirador de l'invention ne comprenne que deux parties 4, 5 à assembler par emboîtement, rend le montage et le démontage particulièrement facile à réaliser.

Le mirador 1 peut donc être facilement déplacé lorsque le site choisi ne convient pas ou plus.

Par ailleurs, on note que la structure en deux parties 4, 5 rend possible, l'utilisation de l'échelle 4 pour la préparation du site sur lequel on souhaite installer le mirador 1, par exemple pour couper une branche qui entrave l'installation.

De manière notable, les éléments d'assemblage complémentaires 8, 9 de l'échelle 4 et de la platine 5 comprennent un moyen 11 de verrouillage en position assemblée.

Par cela, l'assemblage de l'échelle 4 et de la platine 5 peut être sécurisé.

Le moyen de verrouillage 11 comprend avantageusement au moins :
- un taraudage 11A réalisé transversalement dans l'une des pièces rigides 8, et ce, à une distance déterminée de la portée 8B qui limite l'emboîtement,
- un perçage 11B réalisé transversalement dans une paroi 9 qui détermine l'alésage 9A de réception d'une des pièces rigides 8, et ce, de manière à pouvoir coïncider avec un taraudage 11A réalisé transversalement dans l'une des pièces rigides 8,
- au moins un organe 11C qui présente, d'une part, un corps 11D destiné à traverser la paroi 9 qui détermine l'alésage 9A, pour coopérer avec le taraudage 11A et entraver le retrait de la pièce rigide 8 et, d'autre part, une tête de manoeuvre 11E.

Par exemple, la tête de manoeuvre 11E est un bouton autorisant la manoeuvre manuelle et plus exactement avec le pouce et l'index.

Ce dispositif de verrouillage est extrêmement simple à mettre en oeuvre.

Le montage et le démontage du mirador 1 peuvent donc être effectué sans outil.

Le moyen de guidage 10 de chacune des pièces rigides 8 entre ses positions de transport et d'utilisation, est de type tel qu'il détermine l'oscillation de la pièce rigide 8 autour d'un axe 8C qui, sensiblement parallèle au plan médian P2 à la platine 5, est sécant au plan P1 dans lequel la pièce rigide 8 s'étend en position d'utilisation.

Ces caractéristiques techniques garantissent qu'un angle déterminé soit toujours respecté entre le plan médian P2 de la platine 5 et un plan médian P3 à l'échelle 5.

Par plan P3 médian à l'échelle 4, on désigne un plan qui s'étend à mi-distance entre deux faces principales du volume d'enveloppe de l'échelle 4.

L'angle entre le plan P2 médian à la platine 5 et le plan P3 médian à l'échelle 4 est déterminé de manière telle que, le plan médian P2 à la platine 5 étant sensiblement horizontal, l'échelle 4 forme avec le sol 3 un angle conforme aux préconisations en matière de sécurité.

Par cela, l'utilisateur du mirador 1, qui ne peut pas modifier l'angle entre le plan P2 médian à la platine 5 et le plan P3 médian à l'échelle 4, est conduit à disposer l'échelle 4 sur le sol 3 en respectant les préconisations de sécurité quant à l'inclinaison de l'échelle 4, à défaut de quoi l'utilisation de la platine 5 est, d'une part, notablement inconfortable, dans les cas d'inclinaison non recommandée de l'échelle 4 et, d'autre part, totalement impossible dans les cas extrêmes d'inclinaison proscrite.

Dans une forme remarquable de réalisation, le moyen de guidage 10 de chacune des pièces rigides 8 entre ses positions de transport et d'utilisation : comprend un arbre 10A :
- sur lequel la pièce 8 rigide est fixée par l'une de ses extrémités,
- qui est, quant à lui, de part et d'autre de la zone de fixation de la pièce rigide, guidé en rotation autour de son axe 8C longitudinal et immobilisé en rotation selon cet axe 8C par des portées de guidage à cet effet, associées à la platine 5.

Par exemple, le moyen 10 de guidage de l'arbre 10A qui porte les pièces rigides 8 d'assemblage comprend, d'une part, des portées cylindriques de révolution qui coopèrent avec des portées complémentaires prévues aux extrémités de l'arbre 8 et, d'autre part, des portées opposées qui coopèrent avec des butées axiales également prévues aux extrémités dudit arbre 8.

Ces caractéristiques techniques garantissent qu'une grande robustesse de l'assemblage platine 5 et échelle 4, du fait que les pièces rigides 8 portées par la platine 5 s'escamotent chacune autour d'un axe 8C qui est sécant au plan P1 dans lequel l'échelle 4 doit se trouver après qu'elle ait été assemblée à la platine par le biais des éléments d'assemblage complémentaires 8, 9.

Avantageusement, d'une part, la platine 5 est constituée de manière à former l'assise 5 d'un siège qui outre les faces supérieure 5A et inférieure 5B délimitées par quatre rives 5C à 5F, dont deux rives latérales 5C, 5D, une rive dorsale 5F équipée du moyen 6 d'appui sur un support vertical 2, une rive 5E frontale opposée et, d'autre part, cette assise 5 porte un dossier 12 rabattable contre sa face supérieure 5B, et ce, par articulation autour d'un axe 12A sensiblement parallèle à l'intersection du plan médian P2 à la platine 5 et d'un plan dans lequel s'étend le dossier 12.

En vue de l'articulation du dossier 12 sur la platine 5 :
- la platine 5 présente au niveau de ses deux rives latérales 5C, 5D des alésages alignés sur un même axe 12A, dit axe d'articulation, sensiblement parallèle à l'intersection du plan médian P2 à la platine 5 et d'un plan dans lequel s'étend le dossier 12,
- le dossier 12 porte deux pattes 12B qui, disposées pour s'étendre sensiblement dans le plan d'une des rives latérales 5C, 5D de la platine 5, présentent chacune un alésage de révolution destiné à être placé en coïncidence avec l'alésage présenté par la rive au niveau de laquelle ladite patte doit être placée,
- les alésages alignés de la platine et des pattes du dossier sont traversés par un arbre qui présente,
   . une portée de guidage en rotation de la patte du dossier autour de l'axe d'articulation 12A défini,
   . au moins une portée d'immobilisation en rotation et en translation dans l'alésage présenté par la platine,
   . une extrémité libre équipée d'un filetage et sur laquelle est engagée un écrou de serrage 12C de la patte 12B contre la rive 5C, 5D qu'elle jouxte, de manière à permettre l'immobilisation du dossier 12 tant en position d'utilisation qu'en position de transport.

Avantageusement chaque écrou est pourvu d'une poignée de manoeuvre.

De manière notable, cela apparaît aux dessins, la platine 5 porte un garde-corps 13.

De manière remarquable, le garde-corps 13 est constitué par une pièce 13 conformée sensiblement en forme de U de manière à comporter deux branches 13A sensiblement parallèles interconnectées par une branche médiane 13B et les extrémités libres 13C des branches 13A parallèles sont reliées à deux rives latérales 5C, 5D de la platine 5 par un moyen qui assure :
- une fonction d'articulation autour d'un axe 12A au moins sensiblement parallèle à la rive dorsale 5F de la platine 5,
- une fonction d'immobilisation dans au moins deux positions dont, une position dans laquelle le garde-corps 13 comprend le plan médian P2 à la platine 5 et une position dans laquelle le garde-corps 13 forme avec le plan médian P2 à la platine 5, un angle compris entre 0 degré et 90 degrés.

De manière préférentielle et remarquable, le moyen d'articulation du garde-corps comprend des découpes circulaires qui, chacune réalisée à l'extrémité libre d'une des branches parallèles du garde-corps, sont chacune engagée sur l'arbre qui permet la fonction d'articulation autour de l'axe 12A d'articulation du dossier 12 sur la platine 5.

De manière remarquable la longueur des branches parallèles 13A du garde-corps est au moins suffisante pour que, dans la position dans laquelle le garde-corps 13 comprend le plan médian P2 à la platine 5, subsiste, entre la branche médiane 13B et la rive dorsale 5F de la platine 5, un passage au moins suffisant pour qu'une personne puisse engager un bras et une épaule et, ainsi suspendre la platine 5 à son épaule (figure 12).

Par cela, après que la platine 5 et l'échelle 4 pliée aient été, d'une part, placées en appui l'une contre l'autre et d'autre part, associées au moyen d'un lien, telle une sangle, une personne peut facilement porter l'ensemble en suspension sur l'une de ses épaules.

Dans une forme remarquable de réalisation (figure 10), chacune des branches 13A sensiblement parallèles du garde-corps 13 est constituée de deux demi - branches 13D qui sont associées par un moyen 14 sélectivement, d'une part, d'articulation selon un axe 14A dit de repliement, approximativement parallèle à celui 12A d'articulation dudit garde-corps 13 sur la platine 5 et, d'autre part, d'immobilisation en rotation autour de cet axe 14A de repliement, entre deux positions dont une dans laquelle les demi - branches 13D s'étendent dans le prolongement l'une de l'autre et sont verrouillées en cette position et l'autre dans laquelle les demi - branches 13D s'étendent sensiblement l'une contre l'autre et sont également verrouillées en cette position.

Ces caractéristiques techniques permettent de réduire encore l'encombrement du garde-corps 13 qui équipe la platine 5.

Sans pour autant l'exclure, le terme "demi-branches" ne signifie pas que les branches latérales 13A sont chacune obligatoirement divisée en deux parties d'égales longueurs.

Dans une forme préférée de réalisation, chacune de branches latérales 13A du garde-corps 13 est constituée de deux demi-branches de manière telle que lorsque ces dernières sont disposées parallèlement entre elles et au long des rives latérales 5C, 5D de la platine 5, la branche médiane 13B du grade-corps 13 s'étend sensiblement contre la rive dorsale 5F de ladite platine 5.

Cela accroît la compacité du mirador 1 à l'état plié.

De préférence, le moyen 14 sélectivement d'articulation et d'immobilisation comprend des organes manoeuvrables à la main.

De manière également préférentielle, la platine 5 porte au moins un crochet latéral 15 disposé pour autoriser la suspension d'un objet 16, tel un sac (figure 11).

Dans une forme remarquable de réalisation, la platine 5 comprend :
- une plaque sensiblement quadrilatère rectangle, dont une face définit la face supérieure 5B de ladite platine 5 et une face opposée, dite antérieure 5G, est bordée par deux parties 5C, 5D qui, constituant les deux rives latérales opposées de cette platine 5, sont formées par repliement de la plaque, lesquelles rives comprennent chacune une aile principale située dans un plan sensiblement perpendiculaire à la face antérieure 5G au-delà de laquelle elles s'étendent et une aile secondaire qui est orientée vers la rive latérale opposée,
- deux arbres 10A qui, portant chacun l'une des pièces rigides 8 constitutives des éléments d'assemblage complémentaires 8, 9, s'étendent chacun sensiblement contre la face antérieure 5G de la plaque et parallèlement à l'une des rives latérales 5,
- de deux pièces longilignes transversales 5H qui, fixées à la plaque,
   .ont une section transversale concave, en U,
   . s'étendent chacune, avec leur concavité orientée vers la face antérieure 5G de la plaque, et ce, entre les deux rives latérales 5C, 5D et ce, de manière à être sensiblement pincées entre la face antérieure 5G de la plaque et l'aile secondaire de chaque rive 5C, 5D, l'une de ces pièces longilignes transversales 5H bordant la rive frontale 5E de la platine 5 et l'autre s'étendant au près de la rive dorsale 5F de la platine 5, au droit du moyen 6 d'appui contre un support 2 sensiblement cylindrique et vertical,
   . comprennent chacune latéralement deux perforations dans chacune desquelles l'une des extrémités d'un arbre 10A de guidage est engagée jusqu'à buter contre une face non perforée de cette pièce transversale longiligne concave 5H.

Les différents composants de la platine 5 sont avantageusement constitués en aluminium.

Les assemblages entre composants sont avantageusement réalisés au moyen de rivets.

Le respect de ces caractéristiques techniques permet de constituer, de manière économique, une platine robuste et légère.

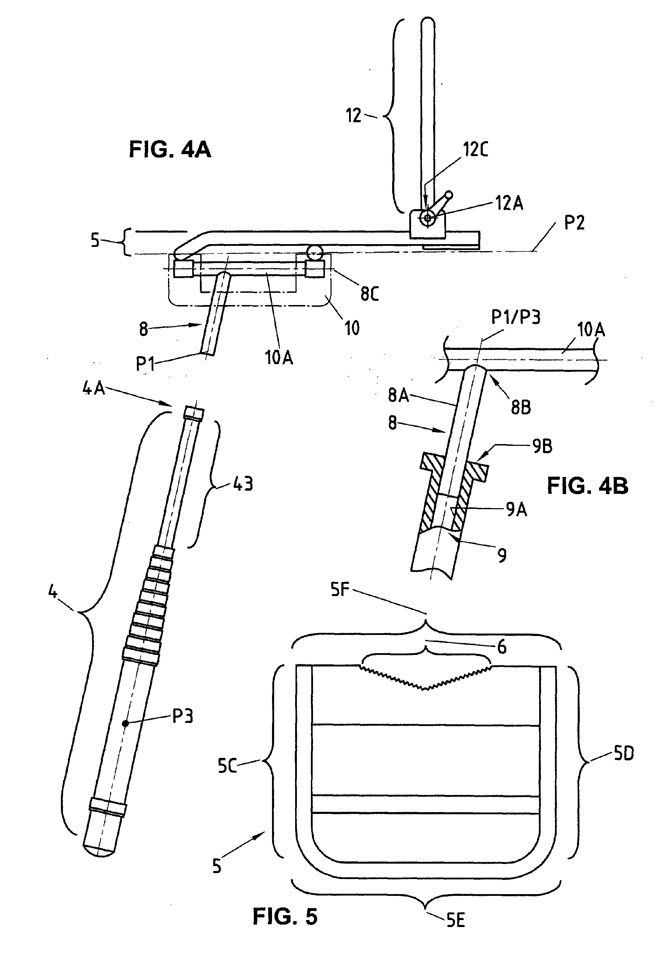

Selon une autre forme remarquable de réalisation (figures 4A à 6), la platine 5 comprend :
- une structure constituée par,
   .une pièce conformée en U,
   . comprenant, d'une part, deux branches parallèles destinées à former les rives latérales 5C, 5D de la platine 5 et à servir de support de tension d'une assise 17 en matériau souple et, d'autre part, une branche médiane qui est destinée à constituer la rive frontale 5E,
   . portant une première pièce transversale qui reliant les branches parallèles, est destinée à constituer la rive dorsale 5F de la platine 5 et à porter le moyen 6 d'appui contre un support 2 sensiblement cylindrique et vertical,
   . portant une seconde pièce transversale qui relie également les branches parallèles et s'étend approximativement parallèlement à la branche médiane et à mi-distance entre ladite branche médiane et la pièce transversale constitutive de la rive dorsale 5F,
- deux arbres 10A qui, portant chacun l'une des pièces rigides 8 constitutives des éléments d'assemblage complémentaires 8, 9, s'étendent chacun parallèlement à l'une des branches latérales de la pièce conformée en U,
- deux groupes de deux éléments opposées dont la fonction est de constituer le moyen de guidage en rotation et l'immobilisation en translation des arbres support 10A en coopérant avec les extrémités de ces arbres, deux de ces éléments étant portés par la branche médiane de la pièce conformée en U et les deux autres étant portés par la seconde pièce transversale, les dits éléments de guidage étant disposés de manière à assurer le guidage des arbres support 10A autour d'axes 8C sensiblement parallèles aux branches parallèles de la pièce conformée en U.

De préférence, la pièce qui constitue la structure est réalisée par cintrage d'un élément tubulaire destiné à constituer un support de tension d'une pièce en matériau souple constituant l'assise 17.

Dans cette forme de réalisation, le dossier 12 est, avantageusement, également constitué par cintrage d'un élément tubulaire, sensiblement en V inversé et par entretoisement des branches divergentes au moyen d'une entretoise, par exemple rapportée par soudage.

Vu de face, le dossier à sensiblement la forme d'un A.

Bien que cela ne soit pas représenté, l'élément cintré que comprend le dossier constitue également un support de tension d'une pièce en matériau souple.

Dans ce mode de réalisation, en vue de l'articulation du dossier 12 sur la platine 5 :
- la platine 5 présente au niveau de ses deux rives latérales 5C, 5D deux pattes qui s'étendent au-dessus de son plan médian et présentent des alésages alignés sur un même axe 12A, dit axe d'articulation, sensiblement parallèle à l'intersection du plan médian P2 à la platine 5 et d'un plan dans lequel s'étend le dossier 12,
- les extrémités libres des branches divergentes du dossier 12 présentent chacune un alésage de révolution destiné à être placé en coïncidence avec l'alésage présenté par une patte portée par la platine,
- les alésages alignés des pattes de la platine et du dossier sont traversés par un arbre qui présente,
   . une portée de guidage en rotation de la patte du dossier autour de l'axe d'articulation 12A défini,
   . au moins une portée d'immobilisation en rotation et en translation dans l'alésage. présenté par la platine,
   . une extrémité libre équipée d'un filetage et sur laquelle est engagé un écrou de serrage de la patte contre la rive qu'elle jouxte, de manière à permettre l'immobilisation du dossier tant en position d'utilisation qu'en position de transport.

En construisant une platine qui, a l'état plié, s'inscrit dans un volume parallélépipédique dont les arêtes mesurent 0,6, 0,5 et 0,065 mètre et, en utilisant une échelle qui, à l'état plié (figures 7 à 9), s'inscrit dans un volume parallélépipédique dont les arêtes mesurent 0,73, 0,5 et 0,07 mètre, on obtient un ensemble qui peut, sans difficulté, être rangé dans le coffre d'une automobile ou dans son habitacle, par exemple derrière un siège de cette automobile.

Sur les figures 7 à 10 et 12 l'échelle et la platine ont été représentées associées au moyen d'un lien, telle une sangle S.

Avantageusement, c'est le lien qui permet de relier le mirador au support vertical 2 qui est utilisé pour rassembler l'échelle et la platine dans la configuration de transport et rangement précitée.

Un ensemble d'un tel volume peut également être facilement rangée dans une armoire.

Selon une autre forme remarquable de réalisation, le mirador 1 comprend une platine 5 qui présente deux faces principales opposées, dont une face dite inférieure 5A destinée à être orientée vers le sol et une face 5B, dite supérieure, dont l'étendue est au moins suffisante pour constituer une assise pour une personne.

Ce mirador est remarquable en ce qu'en position d'utilisation :
- la platine 5 est portée au-dessus de l'extrémité supérieure 4A de l'échelle 4, par au moins une pièce 18 qui, dite de déport, s'élève au-dessus de ladite extrémité supérieure 4A de l'échelle en y prenant appui par une pièce transversale 19, et ce, de manière telle que la platine 5 s'étende, d'une part, dans un plan approximativement horizontal et situé à une hauteur déterminée D au-dessus de ladite extrémité supérieure 4A de l'échelle 4 et, d'autre part, avec une rive frontale 5E située sensiblement en retrait par rapport à un plan médian P3 à l'échelle 4,
- l'extrémité supérieure 4A de l'échelle 4 et la pièce transversale 19 présentent des portées d'emboîtement complémentaires 8A, 8B, 9A, 9B pour, en coopérant, assurer la liaison mécanique de la platine 5 et de l'extrémité supérieure 4A de l'échelle 4.

Cette forme de réalisation permet qu'une personne puisse se tenir en station debout sur le mirador et précisément en appui debout sur la pièce transversale 19, et ce, en utilisant éventuellement la rive frontale 5E de la platine 5 comme surface d'appui pour conserver l'équilibre.

De manière préférentielle et remarquable :
- d'une part, l'extrémité supérieure 4A de l'échelle 4 présente deux alésages 9A qui, chacun déterminé par une paroi 9, s'ouvrent dans une face extrême 9B située au sommet de l'échelle 4 et s'étendent, selon un entraxe prédéterminé, sensiblement parallèlement à la direction longitudinale de l'échelle et,
- d'autre part, la pièce transversale 19 porte des pièces 8 rigides allongées 8 qui s'étendent selon un entraxe sensiblement égal à celui prévu entre les alésages 9A et présentent chacune des portées 8A, 8B dont l'une 8A permet l'emboîtement dans l'un de ces alésages 9A et, l'autre 8B limite cet emboîtement par appui sur la face extrême 9B.

Par ailleurs, au moins l'un des deux alésages prévus à l'une des extrémités supérieures 4A de l'échelle 4 et au moins la pièce rigide allongée 8 destinée à coopérer par emboîtement avec cet alésage sont équipés d'un organe d'immobilisation en position emboîtée.

Par exemple cet organe d'immobilisation consiste en une goupille engagée dans des alésages réservés en coïncidence dans les pièces à immobiliser.

Outre qu'elles simplifient la construction, ces particularités techniques accroissent la robustesse du mirador.

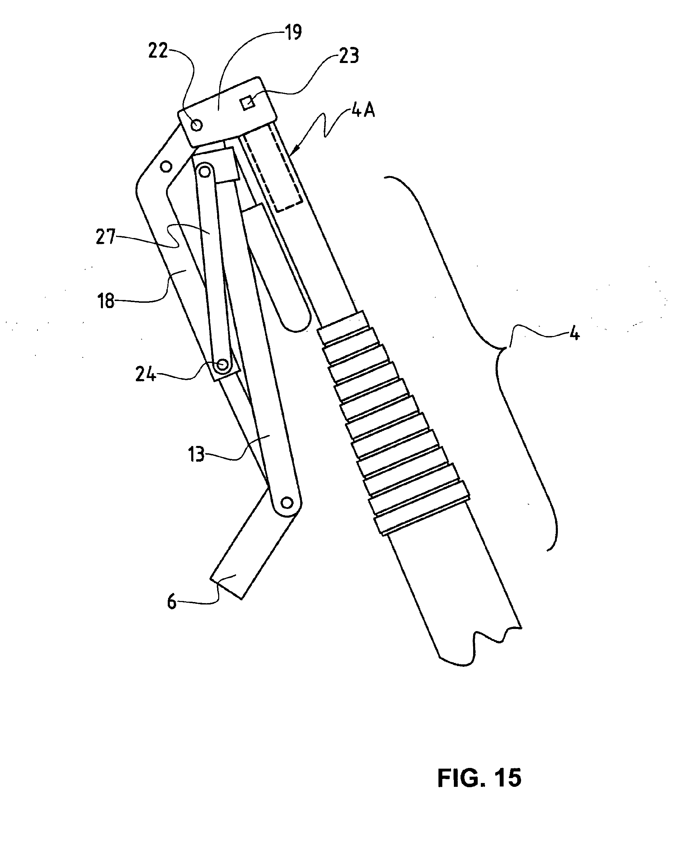

De manière encore remarquable, chaque pièce 18 de déport et la pièce transversale 19 au-dessus de laquelle elle s'élève en position d'utilisation du mirador coopèrent par le biais d'une liaison mécanique première 22 autorisant une articulation de ladite pièce de déport 18 entre deux positions dont :
- une première, dans laquelle cette pièce de déport 18 porte la platine 5, d'une part, dans un plan situé à une hauteur déterminée D au-dessus de cette extrémité supérieure 4A et, d'autre part, avec une rive frontale 5E située sensiblement en retrait par rapport à un plan médian P3 à l'échelle 4, et
- une seconde dans laquelle ladite pièce de déport 18 s'étend sensiblement contre l'un des montants de l'échelle 4 (figure 15).

Préférentiellelement, la liaison mécanique première 22 autorisant une articulation de chaque pièce de déport 18 sur ladite pièce transversale est équipée d'un organe 23 d'immobilisation en sa position dite première.

De manière remarquable, chaque pièce de déport 18 et la platine 5 sont associées par une liaison mécanique deuxième 24 autorisant une articulation de ladite platine 5 entre deux positions dont :
- une première position dans laquelle elle est à même de s'étendre, d'une part, dans un plan situé à une hauteur déterminée D au-dessus de cette extrémité supérieure 4A et, d'autre part, avec une rive frontale 5E située sensiblement en retrait par rapport à un plan médian P3 à l'échelle 4, et
- une seconde position dans laquelle elle est à même de s'étendre sensiblement contre l'échelle 4.

Ces particularités techniques permettent de construire un mirador qui peut être plié sous un volume réduit.

Au moins l'une des pièces 18 de déport porte une pièce 6 constituant un moyen d'appui sur un support 2 sensiblement cylindrique et vertical.

De manière encore remarquable, le mirador 1 comprend deux pièces 18 de déport disposées chacune contre une rive latérale 5C, 5D de la platine 5.

Préférentiellement, en position d'utilisation du mirador chaque pièce 18 de déport forme avec le plan médian de l'échelle un angle compris entre vingt et quarante degrés.

De manière notable, le mirador 1 comprend deux pièces 18 de déport et ces pièces portent un garde-corps 13 constitué par une pièce 13 conformée sensiblement en U de manière à comporter deux branches 13A sensiblement parallèles interconnectées par une branche médiane 13B, les extrémités libres 13C des branches 13A parallèles étant chacune reliée par une liaison mécanique troisième 25 à une desdites pièces 18 de déport.

Avantageusement, chacune des deux branches 13A sensiblement parallèles du garde-corps 13 est constituée de deux pièces qui sont liées entre elles par une liaison mécanique quatrième 26 autorisant une articulation entre deux positions dont :
- une première position dans laquelle lesdites pièces s'étendent sensiblement l'une dans le prolongement de l'autre de manière à définir le garde-corps en U et,
- une deuxième position dans laquelle lesdites pièces s'étendent sensiblement l'une contre l'autre de manière à limiter l'encombrement longitudinal dudit garde-corps 13.
   La liaison mécanique troisième 25 entre l'extrémité libre 13C de chacune des branches 13A parallèles du garde-corps et une des pièces 18 de déport autorise l'articulation du garde-corps 13 entre deux positions dont
- une dans laquelle ses branches parallèles 13A s'étendent chacune sensiblement parallèlement à l'une des pièces 18 de déport, et
- une autre dans laquelle, en position d'utilisation du mirador, ses branches parallèles 13A s'étendent dans un plan sensiblement horizontal.

De préférence, chacune des deux pièces 18 de déport est télescopique au delà de sa liaison mécanique deuxième 24 avec la platine 5 de manière à permettre la réduction de l'encombrement longitudinal de chacune de ces pièces.

De manière également préférentielle, entre le garde-corps 13 et au moins l'une des pièces de déport 18 s'étend au moins une pièce de contreventement 27.

Chaque pièce de contreventement 27 s'étend entre, d'une part, la liaison mécanique deuxième 24 de chaque pièce de déport 18 avec la platine 5 et, d'autre part, l'une des branches parallèles 13A du garde-corps 13.

De préférence, l'échelle utilisée a une hauteur réglable entre sensiblement 0,7 et 3,5 mètres.

Avec une telle échelle, la hauteur visuelle est portée à 4,5 mètres.

A titre d'exemple, lorsque la platine et l'échelle sont réalisées essentiellement en aluminium, dans les dimensions indiquées, le mirador constitué a une masse d'environ quatorze kilogrammes.

## Revendications

1. Mirador (1) conçu pour être appuyé contre un support (2) sensiblement cylindrique et vertical qui s'étend au-dessus du sol (3),
ce mirador (1) comprenant essentiellement,
- une échelle (4) qui, d'une part, comprend elle-même au moins un montant (41) équipé d'une pluralité d'échelons (42) espacés d'un pas déterminé (P) et, d'autre part, est d'un type tel que sa longueur utile totale peut être réduite,
- une platine (5) qui, portée à l'extrémité supérieure (4A) de l'échelle, est équipée d'un moyen (6) d'appui contre le support (2) sensiblement cylindrique et vertical,
ce mirador étant **caractérisé en ce que** :
chaque montant (41) de l'échelle (4) destinée à être associée à la platine est du type constitué d'éléments télescopiques (43) qui sont chacun d'une longueur sensiblement égale au pas (P) qui sépare deux échelons (42).

2. Mirador (1) selon la revendication 1 **caractérisé en ce que** les éléments télescopiques (43) sont d'un type tel qu'ils sont équipés de moyens (44) d'immobilisation entre eux, c'est à dire de moyens (44) qui permettent d'immobiliser chaque élément (43) en translation par rapport à un autre dans lequel il s'emboîte, et ce, que ce soit en position rétractée ou érigée, lesquels moyens (44) sont sélectivement actionnables de manière à permettre le réglage de la longueur utile de l'échelle par pas.

3. Mirador (1) selon la revendication 1 ou 2 et comprenant une platine (5) qui présente deux faces principales opposées, dont une face dite inférieure (5A) destinée à être orientée vers le sol (3) et une face (5B), dite supérieure, dont l'étendue est au moins suffisante pour qu'une personne (7) puisse s'y tenir, ce mirador étant **caractérisé en ce que** :
- la platine (5) et l'extrémité supérieure (4A) de l'échelle (4) comportent des éléments d'assemblage complémentaires (8, 9), et
- la platine (5) est, au niveau de sa face inférieure (5A), équipée de deux pièces rigides allongées (8) qui, sont chacune portée par un moyen (10) de guidage entre deux positions, dont une position, dite de transport, dans laquelle elles s'étendent chacune sensiblement contre la face inférieure (5A) de la platine (5) et une position, dite d'utilisation, dans laquelle elles s'étendent chacune parallèlement entre elles en déterminant un certain entraxe (E1), et ce, dans un plan (P1) qui forme un angle (A) déterminé avec un plan (P2) médian au volume d'enveloppe déterminé entre les deux faces opposées (5A), (5B) inférieure et supérieure de la platine (5),
- l'extrémité supérieure (4A) de l'échelle (4) et les pièces rigides allongées que porte la platine (5) présentent des portées d'emboîtement complémentaires (8A, 8B, 9A, 9B) pour, en coopérant, assurer la liaison démontable de la platine (5) et de l'extrémité (4A) de l'échelle (4).

4. Mirador (1) selon la revendication 3 **caractérisé en ce que** :
- d'une part, l'extrémité supérieure (4A) de l'échelle 4 présente deux alésages (9A) qui, chacun déterminé par une paroi (9), s'ouvrent dans une face extrême (9B) située au sommet de l'échelle (4) et s'étendent, selon un entraxe (E2), sensiblement parallèlement à la direction longitudinale de l'échelle et,
- d'autre part, la platine (5) porte des pièces (8) rigides allongées qui s'étendent selon un entraxe (E1) sensiblement égal à celui prévu (E2) entre les alésages (9A) et présentent chacune des portées (8A, 8B) dont l'une (8A) permet l'emboîtement dans l'un de ces alésages (9A) et, l'autre (8B) limite cet emboîtement par appui sur la face extrême (9B).

5. Mirador (1) selon la revendication 3 ou 4 **caractérisé en ce que** les éléments d'assemblage complémentaires (8, 9) de l'échelle (4) et de la platine (5) comprennent un moyen (11) de verrouillage en position assemblée.

6. Mirador (1) selon l'une quelconque des revendications 3 à 5 **caractérisé en ce que** le moyen de guidage (10) de chacune des pièces rigides (8) entre ses positions de transport et d'utilisation, est de type tel qu'il détermine l'oscillation de la pièce rigide (8) autour d'un axe (8C) qui, sensiblement parallèle au plan médian (P2) à la platine (5), est sécant au plan (P1) dans lequel la pièce rigide (8) s'étend en position d'utilisation.

7. Mirador (1) selon la revendication 6 **caractérisé en ce que** le moyen de guidage (10) de chacune des pièces rigides (8) entre ses positions de transport et d'utilisation comprend un arbre (10A) :
- sur lequel la pièce (8) rigide est fixée par l'une de ses extrémités,
- qui est, quant à lui, de part et d'autre de la zone de fixation de la pièce rigide; guidé en rotation autour de son axe (8C) longitudinal et immobilisé en rotation selon cet axe (8C) par des portées de guidage à cet effet, associées à la platine (5).

8. Mirador (1) selon l'une quelconque des revendications 1 à 7 et dont la platine (5) porte un garde-corps (13), **caractérisé en ce que** le garde-corps (13) est constitué par une pièce (13) conformée sensiblement en forme de U de manière à comporter deux branches (13A) sensiblement parallèles interconnectées par une branche médiane (13B) et les extrémités libres (13C) des branches (13A) parallèles sont reliées à deux rives latérales (5C, 5D) de la platine (5) par un moyen qui assure :
- une fonction d'articulation autour d'un axe (12A) au moins sensiblement parallèle à la rive dorsale (5F) de la platine (5),
- une fonction d'immobilisation dans au moins deux positions dont, une position dans laquelle le garde-corps (13) comprend le plan médian (P2) à la platine (5) et une position dans laquelle le garde-corps (13) forme avec le plan médian (P2) à la platine (5), un angle compris entre 0 degré et 90 degrés.

9. Mirador (1) selon l'une quelconque des revendications 1 à 8 **caractérisé en ce que** la platine (5) comprend :
- une plaque sensiblement quadrilatère rectangle, dont une face définit la face supérieure (5B) de ladite platine (5) et une face opposée, dite antérieure (5G), est bordée par deux parties (5C, 5D) qui, constituant les deux rives latérales opposées de cette platine (5), sont formées par repliement de la plaque, lesquelles rives comprennent chacune une aile principale située dans un plan sensiblement perpendiculaire à la face antérieure (5G) au-delà de laquelle elles s'étendent et une aile secondaire qui est orientée vers la rive latérale opposée,
- deux arbres (10A) qui, portant chacun l'une des pièces rigides (8) constitutives des éléments d'assemblage complémentaires (8, 9), s'étendent chacun sensiblement contre la face antérieure (5G) de la plaque et parallèlement à l'une des rives latérales (5),
- de deux pièces longilignes transversales (5H) qui, fixées à la plaque,
. ont une section transversale concave, en U,
. s'étendent chacune, avec leur concavité orientée vers la face antérieure (5G) de la plaque, et ce, entre les deux rives latérales (5C, 5D) et ce, de manière à être sensiblement pincées entre la face antérieure (5G) de la plaque et l'aile secondaire de chaque rive (5C, 5D), l'une de ces pièces longilignes transversales (5H) bordant la rive frontale (5E) de la platine (5) et l'autre s'étendant au près de la rive dorsale (5F) de la platine (5), au droit du moyen (6) d'appui contre un support (2) sensiblement cylindrique et vertical,
. comprennent chacune latéralement deux perforations dans chacune desquelles l'une des extrémités d'un arbre (10A) de guidage est engagée jusqu'à buter contre une face non perforée de cette pièce transversale longiligne concave (5G).

10. Mirador (1) selon l'une quelconque des revendications 1 à 8 **caractérisé en ce que** la platine (5) comprend :
- une structure constituée par,
. une pièce conformée en U,
. comprenant, d'une part, deux branches parallèles destinées à former les rives latérales (5C, 5D) de la platine (5) et à servir de support de tension d'une assise (17) en matériau souple et, d'autre part, une branche médiane qui est destinée à constituer la rive frontale (5E),
. portant une première pièce transversale qui reliant les branches parallèles, est destinée à constituer la rive dorsale (5F) de la platine (5) et à porter le moyen (6) d'appui contre un support (2) sensiblement cylindrique et vertical,
. portant une seconde pièce transversale qui relie également les branches parallèles et s'étend approximativement parallèlement à la branche médiane et à mi-distance entre ladite branche médiane et la pièce transversale constitutive de la rive dorsale (5F),
- deux arbres (10A) qui, portant chacun l'une des pièces rigides (8) constitutives des éléments d'assemblage complémentaires (8, 9), s'étendent chacun parallèlement à l'une des branches latérales de la pièce conformée en U,
- deux groupes de deux éléments opposées dont la fonction est de constituer le moyen de guidage en rotation et l'immobilisation en translation des arbres support (10A) en coopérant avec les extrémités de ces arbres, deux de ces éléments étant portés par la branche médiane de la pièce conformée en U et les deux autres étant portés par la seconde pièce transversale, les dits éléments de guidage étant disposés de manière à assurer le guidage des arbres support (10A) autour d'axes (8C) sensiblement parallèles aux branches parallèles de la pièce conformée en U.

11. Mirador (1) selon la revendication 1 ou 2 et comprenant une platine (5) qui présente deux faces principales opposées, dont une face dite inférieure (5A) destinée à être orientée vers le sol et une face (5B), dite supérieure, dont l'étendue est au moins suffisante pour constituer une assise pour une personne, ce mirador étant **caractérisé en ce qu'**en position d'utilisation :
- la platine (5) est portée au-dessus de l'extrémité supérieure (4A) de l'échelle (4), par au moins une pièce (18) qui, dite de déport, s'élève au-dessus de ladite extrémité supérieure (4A) de l'échelle en y prenant appui par une pièce transversale (19), et ce, de manière telle que la platine (5) s'étende, d'une part, dans un plan approximativement horizontal et situé à une hauteur déterminée D au-dessus de ladite extrémité supérieure (4A) de l'échelle (4) et, d'autre part; avec une rive frontale (5E) située sensiblement en retrait par rapport à un plan médian (P3) à l'échelle (4),
- l'extrémité supérieure (4A) de l'échelle (4) et la pièce transversale (19) présentent des portées d'emboîtement complémentaires (8A, 8B, 9A, 9B) pour, en coopérant, assurer la liaison mécanique de la platine (5) et de l'extrémité supérieure (4A) de l'échelle (4).

12. Mirador (1) selon la revendication 11 **caractérisé en ce que** :
- d'une part, l'extrémité supérieure (4A) de l'échelle (4) présente deux alésages (9A) qui, chacun déterminé par une paroi (9), s'ouvrent dans une face extrême (9B) située au sommet de l'échelle (4) et s'étendent, selon un entraxe prédéterminé, sensiblement parallèlement à la direction longitudinale de l'échelle et,
- d'autre part, la pièce transversale (19) porte des pièces rigides allongées (8) qui s'étendent selon un entraxe sensiblement égal à celui prévu entre les alésages (9A) et présentent chacune des portées (8A, 8B) dont l'une (8A) permet l'emboîtement dans l'un de ces alésages (9A) et, l'autre (8B) limite cet emboîtement par appui sur la face extrême (9B).

13. Mirador (1) selon la revendication 12 **caractérisé en ce qu'**au moins l'un des deux alésages prévus à l'une des extrémités supérieures (4A) de l'échelle (4) et au moins la pièce rigide allongée (8) destinée à coopérer par emboîtement avec cet alésage sont équipés d'un organe d'immobilisation en position emboîtée.

14. Mirador (1) selon la revendication 11 **caractérisé en ce que** chaque pièce (18) de déport et la pièce transversale (19) au-dessus de laquelle elle s'élève en position d'utilisation du mirador coopèrent par le biais d'une liaison mécanique première (22) autorisant une articulation de ladite pièce de déport (18) entre deux positions dont :
- une première, dans laquelle cette pièce de déport (18) porte la platine (5), d'une part, dans un plan situé à une hauteur déterminée. D au-dessus de cette extrémité supérieure (4A) et, d'autre part, avec une rive frontale (5E) située sensiblement en retrait par rapport à un plan médian (P3) à l'échelle (4), et
- une seconde dans laquelle ladite pièce de déport s'étend sensiblement contre l'un des montants de l'échelle (4).

15. Mirador (1) selon la revendication 14 **caractérisé en ce que** la liaison mécanique première (22) autorisant une articulation de chaque pièce de déport (18) sur ladite pièce transversale est équipée d'un organe (23) d'immobilisation en sa position dite première.

16. Mirador (1) selon la revendication 11 **caractérisé en ce que** chaque pièce de déport (18) et la platine (5) sont associées par une liaison mécanique deuxième (24) autorisant une articulation de ladite platine (5) entre deux positions dont :
- une première position dans laquelle elle est à même de s'étendre, d'une part, dans un plan situé à une hauteur déterminée D au-dessus de cette extrémité supérieure (4A) et, d'autre part, avec une rive frontale (5E) située sensiblement en retrait par rapport à un plan médian (P3) à l'échelle (4), et
- une seconde position dans laquelle elle est à même de s'étendre sensiblement contre l'échelle (4).

17. Mirador (1) selon l'une des revendications 11 à 16 **caractérisé en ce qu'**au moins l'une des pièces (18) de déport porte une pièce (6) constituant un moyen d'appui sur un support (2) sensiblement cylindrique et vertical.

18. Mirador (1) selon l'une des revendications 11 à 17 **caractérisé en ce qu'**il comprend deux pièces (18) de déport disposées chacune contre une rive latérale (5C, 5D) de la platine (5).

19. Mirador (1) selon l'une des revendications 11 à 17 **caractérisé en ce qu'**en position d'utilisation du mirador chaque pièce (18) de déport forme avec le plan médian de l'échelle un angle compris entre vingt et quarante degrés.

20. Mirador (1) selon l'une des revendications 11 à 17 **caractérisé en ce qu'**il comprend deux pièces (18) de déport et ces pièces portent un garde-corps (13) constitué par une pièce (13) conformée sensiblement en U de manière à comporter deux branches (13A) sensiblement parallèles interconnectées par une branche médiane (13B), les extrémités libres (13C) des branches (13A) parallèles étant chacune reliée par une liaison mécanique troisième (25) à une desdites pièces (18) de déport.

21. Mirador (1) selon la revendication 8 **caractérisé en ce que** chacune des deux branches (13A) sensiblement parallèles du garde-corps (13) est constitués de deux pièces qui sont liées entre elles par une liaison mécanique quatrième (26) autorisant une articulation entre deux positions dont :
- une première position dans laquelle lesdites pièces s'étendent sensiblement l'une dans le prolongement de l'autre de manière à définir le garde-corps en U, et
- une deuxième position dans laquelle lesdites pièces s'étendent sensiblement l'une contre l'autre de manière à limiter l'encombrement longitudinal dudit garde-corps (13).

22. Mirador (1) selon la revendication 21 **caractérisé en ce que** la liaison mécanique troisième (25) entre l'extrémité libre (13C) de chacune des branches (13A) parallèles du garde-corps et une des pièces (18) de déport autorise l'articulation du garde-corps (13) entre deux positions dont :
- une dans laquelle ses branches parallèles (13A) s'étendent chacune sensiblement parallèlement à l'une des pièces (18) de déport, et
- une autre dans laquelle, en position d'utilisation du mirador, ses branches parallèles (13A) s'étendent dans un plan sensiblement horizontal.

23. Mirador (1) selon la revendication 19 ou 20 **caractérisé en ce que** chacune des deux pièces (18) de déport est télescopique au dela de sa liaison mécanique deuxième (24) avec la platine (5) de manière à permettre la réduction de l'encombrement longitudinal de chacune de ces pièces.

24. Mirador (1) selon la revendication 22 **caractérisé en ce qu'**entre le garde-corps et au moins l'une des pièces de déport s'étend au moins une pièce de contreventement (27).

25. Mirador (1) selon la revendication 24 **caractérisé en ce que** chaque pièce de contreventement (27) s'étend entre, d'une part, la liaison mécanique deuxième (24) de chaque pièce de déport (18) avec la platine (5) et, d'autre part, l'une des branches parallèles (13A) du garde-corps (13).
